Europäisches Patentamt

European Patent Office

Office européen des brevets

(11) Publication number: **0 151 932**
A2

# EUROPEAN PATENT APPLICATION

(21) Application number: **85100215.4**

(22) Date of filing: **11.01.85**

(51) Int. Cl.⁴: **G 01 T 1/29**

(30) Priority: **13.01.84 JP 4448/84**

(43) Date of publication of application:
**21.08.85 Bulletin 85/34**

(84) Designated Contracting States:
**DE FR NL**

(71) Applicant: FUJI PHOTO FILM CO., LTD.
210 Nakanuma Minami Ashigara-shi
Kanagawa 250-01(JP)

(72) Inventor: Miyahara, Junji c/o Fuji Photo Film Co., Ltd.
798, Miyanodai Kaise-machi
Ashigarakami-gun Kanagawa-ken(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Radiation image forming method and apparatus.

(57) In a radiation image forming system, an object is two-dimensionally scanned by a linear radiation beam by moving the linear radiation beam with respect to the object in a direction intersecting the longitudinal direction of the linear radiation beam. The radiation passing through the object is recorded on a plane radiation sensitive material having a size for receiving the radiation passing through the object during two-dimensional scanning of the object. The image thus recorded is detected and converted into a digital image signal.

F I G.3

EP 0 151 932 A2

## Field of the Invention

This invention relates to a method of forming an image of a radiation such as X-rays passing through an object such as the human body, and an apparatus for carrying out the method. This invention particularly relates to a method of forming a radiation image by digital radiography wherein an object is scanned by a linear radiation beam and the radiation passing through the object is recorded on a plane radiation sensitive material, and an apparatus for carrying out the method.

## Description of the Prior Art

As a new technique of recording a radiation image, typically an X-ray image, digital radiography has recently been put into practice. In digital radiography, in order to improve image quality and accordingly diagnostic efficiency and accuracy, by utilizing image processing or the like, the radiation image is converted into electric signals instead of recording on an X-ray film, and a visible image is reproduced by use of a cathode ray tube (CRT), a laser printer, or the like on the basis of the electric signals. Digital radiography is classified into one type using a line detector and another type using an area detector.

In digital radiography using the line detector, an object is scanned by a linear X-ray beam, and the line sensor is positioned to receive and detect the linear X-ray beam passing through the object. The X-ray image thus

- 2 -

recorded is read out by use of an image intensifier (I.I.), a photodiode array, or the like. In this method, since scattered X-rays are not recorded, it is possible to record an image of low noise. However, the method is disadvantageous in that the image quality is adversely affected by the error caused by any difference in performance between sensing elements of the line sensor. Further, resolution depends on the size of the sensing elements, and cannot be selected to match the purpose of image recording.

In digital radiography using the area detector, the whole object is instantaneously exposed to an X-ray beam spreading from a point X-ray source, and the X-ray beam passing through the object is recorded as a latent image on a plane radiation sensitive material. Then, the latent image is read out by scanning it with a laser beam or by use of an electrometer array, or the like. In this method, the X-ray utilization efficiency is high and high resolution can be obtained. However, the method is disadvantageous in that a comparatively high level of noise arises since scattered X-rays are not eliminated, and contrast resolution is low.

SUMMARY OF THE INVENTION

The primary object of the present invention is to provide a method of forming a radiation image of low noise.

Another object of the present invention is to provide a method of forming a radiation image having a uniform image quality and high resolution.

The specific object of the present invention is to provide an apparatus for carrying out the method.

The method of and apparatus for forming a radiation image in accordance with the present invention are characterized by scanning an object such as the human body by a linear X-ray beam, recording the X-ray beam passing through the object in a plane radiation sensitive material, and reading out the X-ray image to obtain digital image signals. That is, the linear X-ray beam is used for image recording as in the case of the conventional digital radiography using a line detector and is detected by use of an area detector. In the present invention, it becomes possible to form an image of high resolution and free from noise caused by scattered X-rays.

A slit is used to obtain the linear X-ray beam. As the area detector, it is possible to use a stimulable phosphor sheet or a photoconductive material sheet.

In the present invention, since an image of an object is obtained by use of a linear X-ray beam, it is possible to obtain an X-ray image free from noise caused by scattered X-rays. Further, since the image is recorded on a plane radiation sensitive material, it is possible to obtain an image of high resolution. Also, since no line sensor is used, the problem with regard to the error caused by any difference in performance between sensing elements does not arise, and it is possible to obtain an image having a uniform quality over the whole image. Thus the present invention forms an image having an improved image quality and accordingly a high diagnostic efficiency and accuracy, and is practically very advantageous.

## BRIEF DESCRIPTION OF THE DRAWINGS

Figure 1 is a schematic view showing the basic configuration of an embodiment of the apparatus for carrying out the method of forming a radiation image in accordance with the present invention,

Figure 2 is a schematic view showing another embodiment of the apparatus for carrying out the method of forming a radiation image in accordance with the present invention,

Figure 3 is a schematic view showing the basic configuration of an apparatus for reading out the recorded image by the method of the present invention and an image reproduction system for processing and using the detected electric signals.

## DESCRIPTION OF THE PREFERRED EMBODIMENTS

The present invention will hereinbelow be described in further detail with reference to the accompanying drawings.

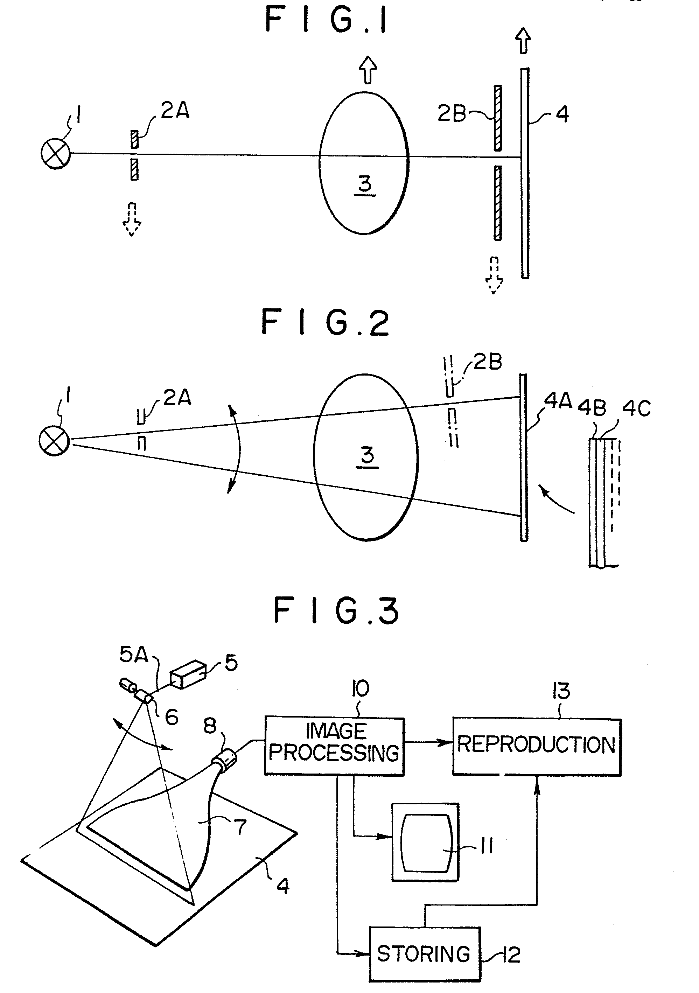

Referring to Figure 1, X-rays emitted by an X-ray source 1 are passed through a first slit 2A and are made to impinge upon an object 3. The X-rays passing through the object 3 are passed through a second slit 2B and are made to impinge upon an X-ray sensitive material 4. The X-ray sensitive material 4 may, for example, be a stimulable phosphor sheet. The slits 2A and 2B are positioned in parallel with each other and aligned with the X-ray source 1 so that the X-ray sensitive material 4 is exposed to the linear X-ray beam passing through the object 3.

The linear X-ray beam is moved with respect to the object 3 in the direction intersecting the longitudinal direction of the linear X-ray beam, i.e. normal to the longitudinal direction of the slits 2A and 2B so that the object 3 is scanned two-dimentionally by the linear X-ray beam. For this purpose, the slits 2A and 2B are maintained still, and the object 3 is moved together with the X-ray sensitive material 4 in the direction as indicated by the full-line arrow. Or, the object 3 and the X-ray sensitive material 4 are maintained still, and the slits 2A and 2B are moved in the direction as indicated by the broken-line arrows while the slits 2A and 2B are aligned with the X-ray source 1. Alternatively, the object 3 and the X-ray sensitive material 4 are moved together in the direction as indicated by the full-line arrow, and the slits 2A and 2B are moved in the direction as indicated by the broken-line arrows. In this manner, an X-ray image of the object 3 is recorded on the X-ray sensitive material 4.

As shown in Figure 3, in the case where the X-ray sensitive material 4 is a stimulable phosphor sheet, a laser beam 5A emitted as stimulating rays by a laser beam source 5 is deflected by a galvanometer mirror 6 to impinge upon the X-ray sensitive material 4 carrying the X-ray image stored therein so that the X-ray sensitive material 4 is two-dimentionally scanned by the laser beam 5A. As the X-ray sensitive material 4 is exposed to the laser beam 5A, the X-ray sensitive material 4 emits light in proportion to the X-ray energy stored. The emitted light is guided by a light guide member 7, and is detected and converted into an electric image signal by a photomultiplier 8. The electric signal is converted into a digital image signal, and is sent to an image processing section 10 for conducting an image processing such as frequency processing, gradation processing, or the like. After the image processing is conducted, the image signal may be reproduced into a visible image and displayed for monitoring on a display device 11 such as a CRT, or may be stored in a storing device 12 using a magnetic recording tape or the like, or may be directly printed as a visible image by use of a reproducing device 13 such as a laser printer. Of course, image reproduction by the reproducing device 13 may be conducted by use of a signal sent by the storing device 12. The method of and apparatus for photoelectrically detecting the radiation image stored in the stimulable phosphor sheet, processing the electric image signal, and reproducing a visible image by use of the electric image signal are described, for example, in U.S. Patent Nos. 4,258,264, 4,302,672, 4,315,318 and 4,346,295, and Japanese Unexamined Patent Publication Nos. 54(1979)-151398 and 56(1981)-11395.

As the X-ray sensitive material 4, it is also possible to use a photoconductive material such as a selenium sheet. In this case, a latent image recorded on the selenium sheet may be read out by use of a micro-electrometer array.

In the aforesaid embodiment, the single X-ray sensitive material 4 is used, and the X-ray image stored in the X-ray sensitive meterial 4 is read out. However, as shown in Figuer 2, it is also possible to sequentially expose a plurality of X-ray sensitive materials 4A, 4B, 4C, ... to X-rays passing through the same object 3, thereby obtaining many images of the same object 3 for temporal subtraction processing. In this case, the X-ray sensitive material 4A is first exposed to the X-rays passing through the object 3 to record an instantaneous X-ray image of the object 3, and is then removed from the image recording position and is sent to an image read-out section. The second X-ray sensitive material 4B is then sent to the image recording position and is exposed to the X-rays passing through the object 3 to record an X-ray image of the object 3 at the next moment. The X-ray sensitive material 4B is removed from the image recording position. The same operations are conducted sequentially for the third X-ray sensitive material 4C. In this manner, X-ray images of the same object 3 at different moments are recorded in the X-ray sensitive materials 4A, 4B, 4C, ..., and are used for temporal subtraction processing.

C L A I M S

1. A method of forming a radiation image, which comprises the steps of:

i)        two-dimensionally scanning an object by a linear radiation beam by moving the linear radiation beam with respect to the object in a direction intersecting the longitudinal direction of the linear radiation beam,

ii)       recording the radiation passing through the object on a plane radiation sensitive material having a size for receiving the radiation passing through the object during two-dimensional scanning of the object, and iii)      detecting the recorded image and converting it into a digital image signal.

2. A method as defined in Claim 1 wherein a stimulable phosphor is used as the radiation sensitive material.

3. A method as defined in Claim 1 wherein a photoconductive material is used as the radiation sensitive material.

4. An apparatus for forming a radiation image, which comprises:

i)        a radiation source,

ii)       a slit means for shaping a radiation beam emitted by the radiation source into a linear form,

iii)      an object supporting means for supporting an object at a position receiving the radiation beam which is shaped into the linear form by the slit means,

2    0151932

iv)      a two-dimensional scanning means for moving at least one of the object supporting means and the slit means with respect to the other in the width direction of a slit of the slit means,

v)      a plane radiation sensitive material positioned to receive the linear radiation beam passing through the object during two-dimensional scanning of the object, and

vi)      a read-out means for detecting a radiation image recorded in the radiation sensitive material and converting the radiation image into a digital image signal.

5.  An apparatus as defined in Claim 4 wherein said slit means comprises two slits positioned in parallel with each other and aligned with said radiation source between said radiation source and the plane radiation sensitive material with the object supporting means intervening between the two slits.

0151932

# F I G.1

# F I G.2

# F I G.3